# EUROPEAN PATENT APPLICATION

(11) **EP 1 514 650 A1**
(43) Date of publication of application: **16.03.2005**
(21) Application number: 03746426.0
(22) Date of filing: 03.04.2003
(51) Int. Cl.: B25J 9/22, B25J 19/06

(54) **ROBOT SYSTEM AND CONTROLLER**

(30) Priority: 17.04.2002 JP 2002114727
(71) Applicant: Kabushiki Kaisha Yaskawa Denki, Kitakyushu-shi, Fukuoka 806-0004 (JP)
(72) Inventor: TANAKA, Michiharu, c/o K. K. Yaskawa Denki, Kitakyushu-shi, Fukuoka 806-0004 (JP); MORITA, Ryuichi, c/o K.K. Yaskawa Denki, Kitakyushu-shi, Fukuoka 806-0004 (JP)
(74) Representative: Grünecker, Kinkeldey, Stockmair & Schwanhäusser Anwaltssozietät
(86) International application number: PCT/JP2003/004307
(87) International publication number: WO 2003/086716

(57) **Abstract**

To provide a robot system having an enabling switch circuit for securing the safety of a plurality of operators and a controlling apparatus therefor.

In a robot system having a pendant that is operated by an operator, whereby the operation of a robot (11) is controlled by a signal sent out from the pendant, a plurality of operators operate a single robot by the pendant held by each of the plurality of operators.

## Description

### [Technical Field]

The present invention relates to a robot system in which a plurality of operators operate a single robot by pendants held by each of the operators and a controlling apparatus.

### [Related Art]

A portable teaching apparatus that is generally called a pendant is used for industrial robots using a teaching play back method. An enabling switch is provided on this pendant to secure the safety of an operator. Then, the enabling switch so provided on the pendant is directly connected to a servo power supply controlling device via a relay. Namely, a circuit is designed such that when the enabling switch is opened, a servo power supply for a robot is cut off.

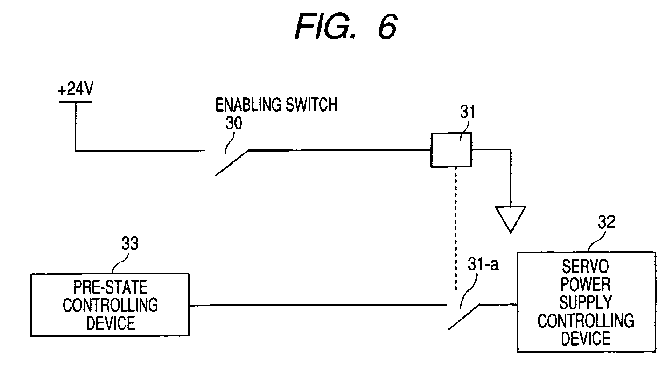

A circuit according to a related art will be described below based on Fig. 6. A pre-stage controlling device 33 is various interlocks such as a limit switch for the over-travel of a robot, an external emergency stop and a servo power supply preparation signal. The limit switch is such as to be activated when the robot is outside an operation range set therefor. In addition, the servo power supply preparation signal is normally a switch provided on a panel part of a robot controlling device. Here, when the enabling switch 30 is closed with the pre-stage controlling device 33 being ON, a relay 31 is energized and a relay contact 31-a is closed. Consequently, a servo power supply controlling device 32 is ON. In addition, the circuit is designed such that when the enabling switch 30 is opened, the servo power supply controlling device 32 is OFF. A servo power supply is made and cut off as the servo power supply controlling device 32 is ON and OFF, whereby the safety of the operator is secured. In addition, in the event that a subordinate enabling switch is needed, there is a method in which an external emergency stop signal which exists in the pre-stage controlling device 33 is connected to a subordinate enabling switch.

When production equipment such as a jig and a robot are in a complicated positional relationship, there may be a case where a monitoring person is required who monitors an operator of the robot, a positional relationship between the operator and the robot and a positional relationship between the jig and the operator. In this case, the monitoring person monitors the operator, the jig and the robot at the same time from the outside of the operation range of the robot and gets him or her ready to depress an emergency stop button which is connected to a robot controlling apparatus. Namely, with the conventional safety device, there has been a problem that a plurality of operators cannot enter the operation range of the robot.

In addition, in an environment where the peripheral area surrounding a working target for the robot is narrow, there may be a case where a main operator who holds a pendant for preparing a working program for the robot and a subordinate operator who monitors the interference of the robot with the surrounding thereof are needed. The main operator performs a teaching job while looking at a controlling point (a distal end of a tool) of the robot. The subordinate operator monitors the robot such that an arm of the robot does not interfere with peripheral devices and reports situations to the main operator. Thus, there may be a case where the robot is taught by the two operators. In a case where such a job is performed, with the method according to the related art in which the external emergency stop signal is connected to the subordinate enabling switch, while the servo power supply can be cut off, in order to switch ON the servo power supply again after the subordinate enabling switch has been opened, such an operation is required as switching ON a servo power supply preparation, which is required by the safety standards. This servo power supply preparation is normally provided on the robot controlling apparatus or at a position where the operator can operate the same at the time of playing back, that is, a place apart from an area where the robot actually operates. Due to this, in the event that closing and opening of the subordinate enabling switch are repeated frequently, the teaching person is forced to operate to switch ON the servo power supply preparation signal which resides at a distant place every time the subordinate enabling switch is closed, this badly deteriorating the working efficiency.

### [Disclosure of the Invention]

Then, the invention was made with a view to solving the problem and an object thereof is to provide a robot system having an enabling switch circuit for securing the safety of a plurality of operators and a controlling apparatus therefor.

According to a first aspect of the invention, there is provided a robot system including a plurality of pendants held by each of a plurality of operators, wherein the pendants send out signals for controlling an operation of a single robot.

According to a second aspect of the invention, there is provided a robot controlling apparatus including, pendants held by each of a main operator and a subordinate operator for operating a single robot, wherein the pendant includes an enabling switch, a circuit adapted to interlock with the enabling switch to generate a driving signal for a servo power supply of the robot, and a circuit for putting the servo power supply in an ON state when both the main enabling switch and the subordinate enabling switch are closed, wherein the pendant held by the main operator includes a main enabling switch, and the pendant held by the subordinate operator includes a subordinate enabling switch.

According to a third aspect of the invention, there is provided a robot controlling apparatus for operating a single robot by pendants held by each of a main operator and a subordinate operator, includes an enabling switch, a circuit adapted to interlock with the enabling switch to generate a driving signal for a servo power supply of the robot, a detection switch for determining whether or not the subordinate enabling switch is effective, wherein the servo power supply is put in an ON state, when a logical sum is obtained of a status signal which becomes 0 when the subordinate enabling switch is opened and 1 when the subordinate enabling switch is closed and a status signal which becomes 0 when the detection switch is opened and 1 when the detection switch is closed, and a logical product becomes 1 of the logical sum and a status signal which becomes 0 when the main enabling switch is opened and 1 when the main enabling switch is closed, and wherein the pendant held by the main operator includes a main enabling switch, and the pendant held by the subordinate operator includes a subordinate enabling switch.

### [Brief Description of the Drawings]

Fig. 1 is a circuit diagram according to an embodiment of the invention.
Fig. 2 is a drawing showing the configuration of the invention.
Fig. 3 is a circuit diagram according to a second embodiment of the invention.
Fig. 4 is a drawing showing the details of a matching device.
Fig. 5 is an explanatory drawing of function.
Fig. 6 is a drawing showing a related art.

### [Best Mode for Carrying out the Invention]

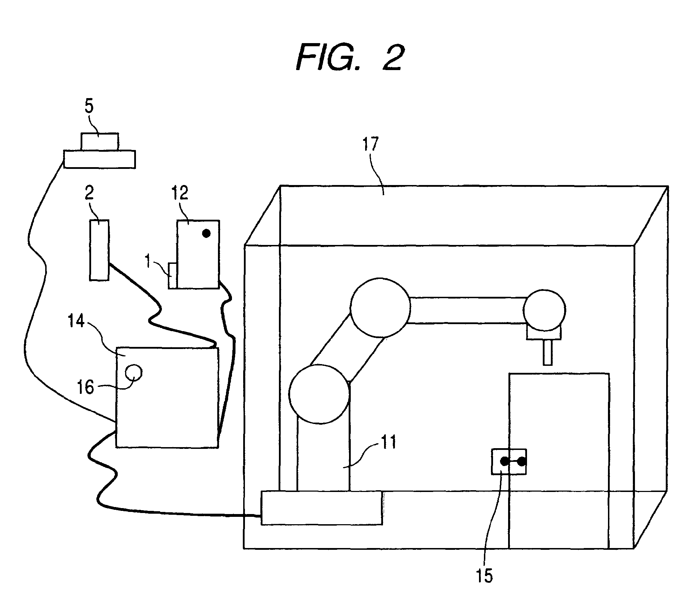

The present invention will be described using the drawings. In Fig. 2, a robot main body 11 is surrounded by a safety fence 17. A safety fence closure detection device 15 sends out an open signal when an access is made to the interior of the safety fence. This signal is connected to a pre-stage controlling device 10 of a robot controlling apparatus. The open signal of the closure detection device 15 of the safety fence 17 and a play mode (a mode in which the robot is played back) signal of a robot are configured as an AND circuit, and a servo power supply of the robot main body 11 is cut off by opening the safety fence at the time of playing back. A main operator changes to a teaching mode (a mode in which the robot main body 11 can be operated by a teaching pendant 12), switches ON a servo power supply preparation signal disposed on a front side of the robot controlling apparatus 14 and squeezes a main enabling switch 1 placed on the teaching pendant 12. Next, a subordinate operator enters the safety fence 17 and squeezes a subordinate enabling switch 2. Namely, the servo power supply is made for the first time by closing both the main enabling switch 1 and the subordinate enabling switch 2.

Here, the enabling switch held by the subordinate operator may be the same as the pendant held by the main operator or only the enabling switch may be provided for the sake of simplicity.

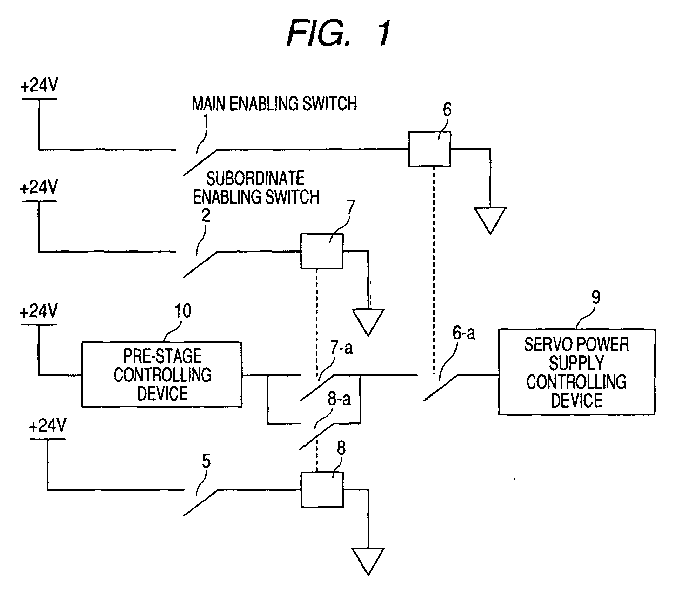

A case will be described in which a job is operated for teaching the robot main body 11. Since the safety fence 17 is opened, the closure detection switch 15 is in an open state. In addition, there is a detection switch 5 for detecting whether or not the subordinate enabling switch 2 is placed at a predetermined place. This detection switch 5 is such as to be designated as, for example, a hanger switch, and is designed to detect the placement at the predetermined place. When the subordinate operator enters the safety fence 17, since the subordinate enabling switch is removed from a predetermined hanger, the detection switch 5 is closed. From this, a relay 8 is not energized, and a relay contact 8-a is opened. In addition, prior to the start of a teaching job, since the servo power supply preparation signal is ON, the servo power supply is made by closing both the main enabling switch 1 and the subordinate enabling switch 2. The operation will be described using Fig. 1. When the main enabling switch 1 placed on the teaching pendant 12 held by the main operator is closed, a relay coil 6 is energized, and a relay contact 6-a becomes ON. When the subordinate enabling switch 2 held by the subordinate operator is closed, a relay coil 7 is energi zed, and a relay contact 7-a becomes ON. In other words, by switching ON the main enabling switch 1 and the subordinate enabling switch 2, the relay coils 6, 7 are energized the relay contacts 6-a, 7-a are closed, a servo power supply controlling device 9 becomes ON and the servo power supply is made. In addition, when the subordinate operator opens the subordinate enabling switch 2, the relay coil 7 is not energized, the contact 7-a is opened, and the servo power supply is cut off. Additionally, when the main enabling switch is opened, the servo power supply is also cut off in the similar fashion.

In the event that the subordinate enabling switch 2 is not connected, the detection switch 5 is set to be closed in order to nullify the subordinate enabling switch 2. There are setting methods in which, for example, another switch is used for electrical switching or the setting is implemented by a software of the robot controlling apparatus 14. In addition, in the event that while it is connected, the subordinate enabling switch 2 is not used, by detecting that the subordinate enabling switch 2 is placed at the predetermined place by the detection switch 5, the subordinate enabling switch is closed, whereby the relay coil 8 is energized and the relay contact 8-a is closed. Consequently, a driving signal to the servo power supply controlling device 9 can be switched ON/OFF only by the main enabling switch 1.

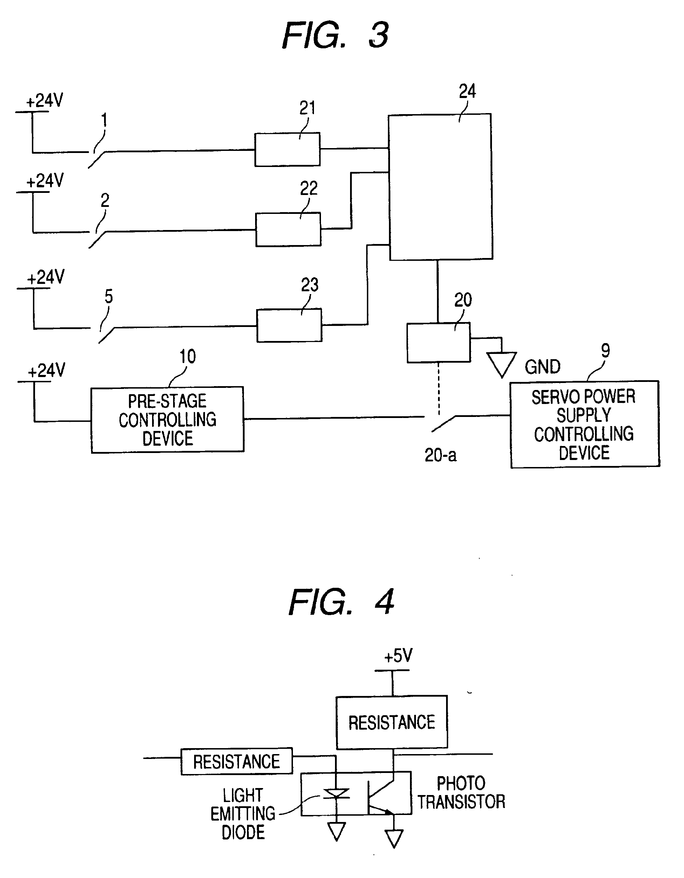

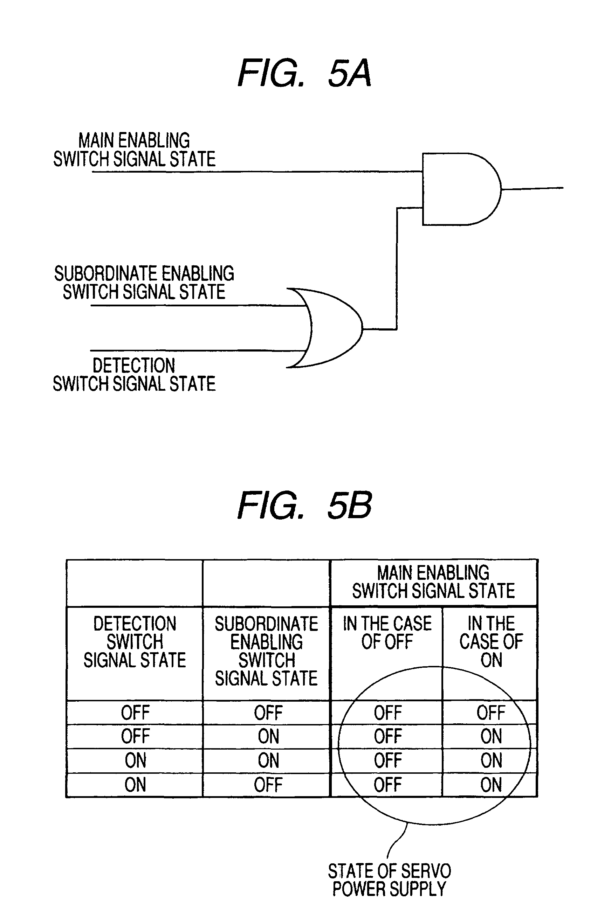

A second embodiment of the invention will be described using Fig. 3. Fig. 3 is an application example of the invention. Matching devices 21, 22, 23 are photo couplers and are each configured as shown in Fig. 4. A main enabling switch 1, a subordinate enabling switch 2 and a detection switch 5 reside outside a robot controlling apparatus 14. One ends of 21, 22, 23 are connected to a CPU 24 via an input circuit, not shown. In the CPU 24, a logical circuit shown in Fig. 5 is realized by a software in a teaching mode. In Fig. 5, for the sake of easy understanding, the description will be made with each switch being ON when in the closed circuit and OFF when in the open circuit. A signal of the detection switch 5 is inputted into a logical circuit. This signal and a signal of the subordinate enabling switch 2 are ORed. What is outputted from the OR circuit and a signal of the main enabling switch are inputted into an AND circuit, and a relay coil denoted by 20 and contact denoted by 20-a are controlled by an output signal from the AND circuit. The function illustrated in Fig. 5B will be shown in a table. For example, if the detection switch is ON, a signal from the subordinate enabling switch is inputted into the AND circuit as it is. If the main enabling switch 1 is ON and the subordinate enabling switch 2 is ON, the AND circuit becomes ON. Namely, the CPU 24 energizes the relay coil 20, whereby the contact 20-a is closed, and the servo power supply controlling device 9 becomes ON to thereby make the servo power supply. In addition, if the main enabling switch is OFF, the output from the AND circuit becomes OFF, whereby the relay contact 20-a is opened, and the servo power supply is cut off. In addition, even in the event that these operations of the CPU 24 are replaced by logical elements, the same advantage can be provided.

According to the safety apparatus for industrial robots, a plurality of operators can stay within the operation area of the robot, and the operators can teach and operate the robot remarkably safely. In addition, a particular advantage can also be provided that the apparatus can be constructed simply.

### [Industrial Applicability]

The invention is effective for the robot system in which the plurality of operators operate the single robot by the pendant held by each of the plurality of operators and controlling apparatus therefor.

## Claims

1. A robot system comprising:
a plurality of pendants held by each of a plurality of operators, wherein
the pendants send out signals for controlling an operation of a single robot.

2. A robot controlling apparatus comprising:
pendants held by each of a main operator and a subordinate operator for operating a single robot, wherein
the pendant includes:
an enabling switch,
a circuit adapted to interlock with the enabling switch to generate a driving signal for a servo power supply of the robot, and
a circuit for putting the servo power supply in an ON state, when both the main enabling switch and the subordinate enabling switch are closed, wherein
the pendant held by the main operator includes a main enabling switch, and
the pendant held by the subordinate operator includes a subordinate enabling switch.

3. A robot controlling apparatus for operating a single robot by pendants held by each of a main operator and a subordinate operator, comprising:
an enabling switch,
a circuit adapted to interlock with the enabling switch to generate a driving signal for a servo power supply of the robot, and
a detection switch for determining whether or not the subordinate enabling switch is effective, wherein
the servo power supply is put in an ON state, when a logical sum is obtained of a status signal which becomes 0 when the subordinate enabling switch is opened and 1 when the subordinate enabling switch is closed and a status signal which becomes 0 when the detection switch is opened and 1 when the detection switch is closed, and a logical product becomes 1 of the logical sum and a status signal which becomes 0 when the main enabling switch is opened and 1 when the main enabling switch is closed, and wherein
the pendant held by the main operator includes a main enabling switch, and
the pendant held by the subordinate operator includes a subordinate enabling switch.
